# DEMANDE DE BREVET EUROPEEN

(11) **EP 2 293 565 A2**
(43) Date de publication de la demande: **09.03.2011**
(21) Numéro de dépôt: 10184087.4
(22) Date de dépôt: 29.12.2000
(51) Int. Cl.: H04N 7/24, H04N 5/00

(54) **Procédé de téléchargement de données précédées par des signaux d'annonce**

(30) Priorité: 30.12.1999 FR 9916746; 23.02.2000 FR 0002257
(62) Demande divisionnaire de: 06118047.7
(71) Demandeur: Thomson Licensing, 92130 Issy-les-Moulineaux (FR)
(72) Inventeur: Patry, Nadine, 92443, Issy-Les-Moulineaux Cedex (FR); Carbonnel, Louis-Xavier, 92443, Issy-Les-Moulineaux Cedex (FR); Roudier, François, 92443, Issy-Les-Moulineaux Cedex (FR); Lesenne, Laurent, 92443, Issy-Les-Moulineaux Cedex (FR); Gautier, Eric, 92443, Issy-Les-Moulineaux Cedex (FR)
(74) Mandataire: Benezeth, Philippe J.L. M.

(57) **Abrégé**

L'invention concerne un procédé de transmission et un procédé de réception de données de mise à jour. Selon l'invention, les données de mise à jour sont émises par un central de communication vers des terminaux à l'aide d'un réseau de diffusion. Puis, les terminaux rendent compte de leur mise à jour au central à travers un réseau bidirectionnel. Le central renouvelle la campagne ou stoppe la campagne actuelle en fonction du nombre de terminaux mis à jour. Une fois la campagne stoppée, les terminaux peuvent être mis à jour avec la liaison bidirectionnelle.

L'invention concerne également le central mettant en oeuvre le procédé d'émission et le récepteur pour la réception et le traitement des données de mise à jour.

## Description

L'invention concerne un procédé de téléchargement de données destinées à mettre à jour des appareils ou donner aux appareils de nouvelles fonctions, les données étant émises par un central de communication.

L'invention s'applique plus particulièrement à l'envoi de programmes à télécharger dans la mémoire d'appareils qui sont typiquement des récepteurs décodeurs vidéo de télévision.

Ces appareils que l'on appellera par la suite plus simplement « décodeurs », reçoivent des signaux diffusés par un satellite ou un réseau hertzien ou un câble optique (co-axial ou optique). Le mode de transmission par le réseau de diffusion est unidirectionnel. Les signaux diffusés représentent des images et du son destinées à la télévision et des informations numériques destinées aux décodeurs. Le réseau de diffusion est constitué de plusieurs canaux de diffusion. Un canal est un moyen d'acquisition d'information en continu à travers un moyen de communication. Pour une télévision analogique, les canaux sont des bandes de fréquence allouées à la diffusion d'une chaîne. Dans ce cas, les informations numériques sont diffusées lors du retour de trame ou « VBI ». Pour une télévision numérique, les canaux sont des flux de données ayant le même identificateur de programme, un second niveau d'identification permet de distinguer les données audio-visuelles des informations numériques. Ces informations constituent des services interactifs, du télétexte ou encore des données de mise à jour du logiciel du décodeur, etc...

Un décodeur comprend une unité centrale qui exécute un logiciel stocké dans une mémoire morte et/ou dans une mémoire programmable non volatile. Il est généralement doté d'une interface de dialogue bidirectionnelle, appelée plus communément « voie de retour » qui permet d'établir une liaison spécifique avec le central de communication. Cette interface est typiquement un modem relié au réseau commuté.

Les informations reçues par le réseau de diffusion sont notamment les données de mise à jour, celles-ci permettent de faire évoluer les fonctionnalités du décodeur. Elles sont stockées dans la mémoire programmable. Le téléchargement automatique des données de mise à jour effectué lors d'une campagne de mise à jour évite à l'utilisateur des interventions manuelles sur le décodeur. Ces données sont envoyées de façon répétitive lors de sessions.

La principale fonction d'un décodeur est d'offrir à l'utilisateur des images et des services interactifs. Le téléchargement des données de mise à jour est une tâche secondaire et de ce fait non prioritaire. Les ressources d'un décodeur ne permettent pas forcément de gérer à la fois des services interactifs et le téléchargement de données de mise à jour. Il faut donc trouver une solution permettant d'effectuer le téléchargement tout en dérangeant le moins possible l'utilisateur. Le téléchargement systématique des données par la voie de retour n'est pas envisageable car elle dispose généralement d'une bande passante plus limitée que celle du réseau de diffusion et l'utilisation d'une ligne particulière coûte de l'argent. L'invention propose une manière flexible de télécharger des données de mise à jour en ménageant les ressources du décodeur afin de déranger le moins possible l'utilisateur.

A cet effet, l'invention a pour objet un procédé de transmission de données de mise à jour par un central de communication vers une pluralité de terminaux **caractérisé en ce qu**'il comporte les étapes suivantes :
- élaboration d'une communication bidirectionnelle entre le central et au moins une partie des terminaux, chaque terminal transmettant au central une indication de l'état de sa mise à jour ;
- comptabilisation au niveau du central du nombre de terminaux effectivement mis à jour ;
- en fonction du nombre de terminaux mis à jour, arrêt ou déclenchement d'un nouvelle campagne de mise à jour.

De cette façon, le central peut connaître le nombre de terminaux effectivement mis à jour. Si ce nombre est suffisant, le central peut stopper la campagne actuelle de mise à jour ou au contraire, si à l'issue de la campagne actuelle ce nombre est insuffisant, le central peut lancer une nouvelle campagne.

L'invention a également pour objet un procédé de réception de données de mise à jour émises par un central de communication vers des terminaux, le central diffusant une campagne de mise à jour au cours de laquelle des terminaux reçoivent et mémorisent les données de mise à jour **caractérisé en ce qu**'il comporte en outre, consécutivement à la mise à jour effective d'un terminal une étape de transmission du récepteur vers le central d'un signal de bon déroulement de l'opération.

De cette façon, les terminaux avertissent le central de l'état de mise à jour du parc de terminaux.

La présente invention a également pour objet le central de communication et les terminaux récepteurs conçus pour mettre en oeuvre les procédés cités précédemment.

D'autres caractéristiques et avantages de l'invention apparaîtront à travers la description d'un exemple de réalisation particulier non limitatif de l'invention.
La figure 1 représente schématiquement un système de communication selon l'invention.
La figure 2 représente un schéma synoptique de décodeurs de télévision mettant en oeuvre l'invention.
La figure 3 montre les données d'un signal d'annonce selon une mode préféré de l'invention.
La figure 4 montre la chronologie des signaux émis par le central selon un premier mode de réalisation de l'invention.
La figure 5 montre la chronologie des signaux émis par le central selon de l'utilisation d'un indicateur d'arrêt des émissions diffusées.
La figure 6 représente une partie du contenu de la mémoire non volatile programmable d'un décodeur selon l'invention.
La figure 7 montre l'évolution de la version de deux groupes de décodeurs lors d'une campagne de mise à jour.
La figure 8 montre l'évolution du contenu des signaux d'annonce lors d'une campagne de mise à jour de deux groupes de décodeurs.
La figure 9 montre les données d'un signal d'annonce selon une variante de l'invention.
La figure 10 montre la chronologie des signaux échangés entre le central et un décodeur selon un second mode l'invention.
La figure 11 montre la chronologie des signaux échangés entre le central et un décodeur selon un quatrième mode de réalisation de l'invention.
La figure 12 montre les données d'un signal d'annonce selon une variante de l'invention.
La figure 13 montre les données d'une table composée de plusieurs signaux d'annonce selon une variante de l'invention.

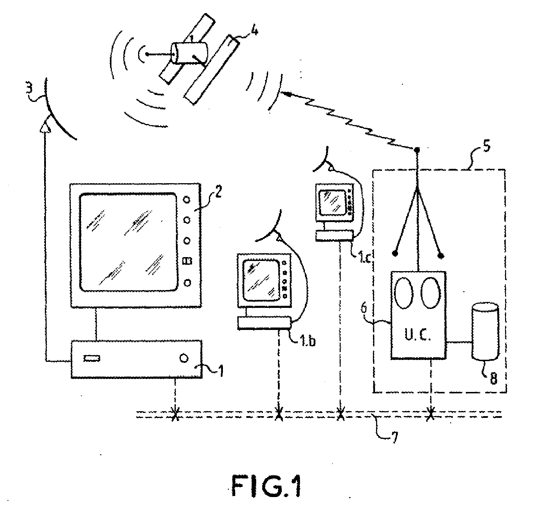

Le schéma de la figure 1 montre les éléments d'un système de communication mettant en oeuvre l'invention. Les décodeurs (1-a, 1-b, 1-c) captent les signaux vidéo à l'aide d'une antenne (3) par exemple parabolique. Ces signaux vidéo sont transmis par un satellite (4) ou des relais hertziens. Ils peuvent également être transmis à l'aide d'un câble ou de tout autre moyen de communication dont le débit est suffisamment important. Les signaux sont aussi reçus par la télévision (2). Les informations contenues dans les signaux audio-vidéo proviennent d'un central de communication (5) doté d'une unité centrale (6). Les informations des signaux audio-vidéo représentent des images destinées à la télévision et des informations destinées aux décodeurs telles que des services interactifs, du télétexte ou des données de mise à jour du logiciel du décodeur. L'insertion de telles informations est une technique en soi bien connue de l'homme du métier. Dans le domaine des télévisions analogiques, par exemple, les informations sont envoyées sous forme de paquets de données lors du retour de trame ou « VBI », entre des signaux d'image. Les décodeurs sont généralement reliés par une voie bidirectionnelle au réseau téléphonique commuté (7) dite « voie de retour » ou VR. Cette voie peut aussi être réalisée à l'aide du câble cité précédemment ou de tout autre moyen à la disposition de l'homme du métier, les liaisons RF par exemple. L'unité centrale du central (6) est également connectée à la voie (7). Le central de communication possède une mémoire (8), contenant des informations relatives à chaque décodeur.

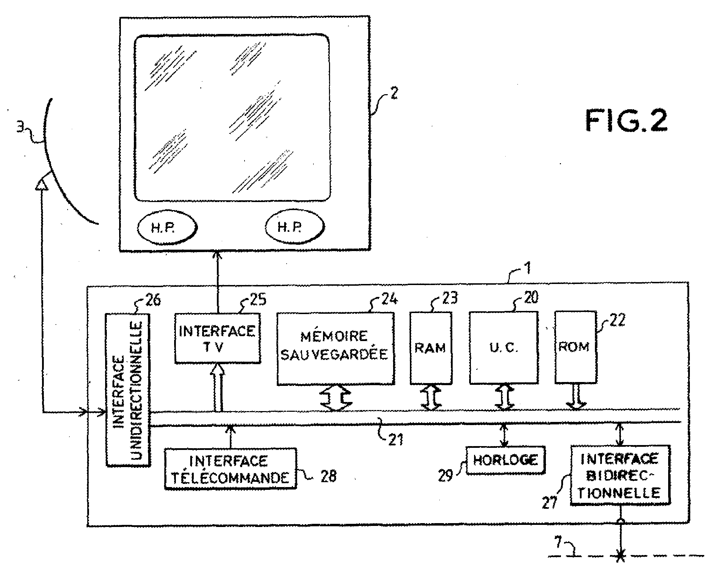

Le schéma de la figure 2 montre un exemple de la structure d'un décodeur (1) selon l'invention. Le décodeur (1) comprend une unité centrale (20) par exemple un microprocesseur ou un circuit spécialisé, connectée aux autres éléments par un bus interne de communication (21). Les principaux éléments connectés au bus sont : une mémoire morte de programme (22) contenant entre autres le programme exécutable à la mise sous tension, une mémoire de travail de type RAM (23), une mémoire non volatile programmable (24) contenant des données (par exemple, des pages d'écran téléchargées) et/ou du code exécutable (par exemple, des données de mise à jour), un connecteur tel qu'une prise péritel ou SCART (25) pour communiquer avec la télévision, une interface de communication unidirectionnelle (26) pour recevoir et traiter les signaux reçus par l'antenne (3), une interface de communication bidirectionnelle (27) (typiquement un modem relié au réseau téléphonique) qui est reliée à la voie de retour et un récepteur infrarouge (28) recevant de manière connue des signaux d'une télécommande. Le décodeur comprend une horloge (29) qui peut être mise à jour par des données téléchargées du réseau. Selon un autre mode de réalisation, le décodeur est intégré à la télévision, ce qui lui permet d'utiliser certains modules déjà présents, comme le syntoniseur et/ou le récepteur infrarouge (28) avec sa télécommande .

Les décodeurs provenant de différents fabricants disposent de différentes configurations matérielles et logicielles, et ont des capacités différentes. C'est pourquoi ils sont identifiés à l'aide d'un identificateur, comprenant deux champs. Cet identificateur est en mémoire interdite en écriture, de type ROM par exemple. Un premier champ contient la référence du constructeur du décodeur. Un second champ contient le type de décodeur. Ces deux champs se trouvent dans la mémoire morte de programme du décodeur.

Les données de mise à jour émises sur le réseau de diffusion sont destinées à un certain modèle de décodeurs, c'est pourquoi ces données sont associés à un identificateur de décodeur ou d'un modèle de décodeur. Avant d'effectuer l'acquisition des données de mise à jour qui sont en cours d'émission sur le réseau de diffusion, un décodeur doit vérifier au préalable si elles lui sont destinées. Pour cela, le décodeur doit contrôler que ses identificateurs de version et de constructeur ont une valeur égale (ou au moins compatible) avec celles se trouvant dans les données de mise à jour. Il est également possible de stocker un identificateur dans un support amovible tel qu'une carte à puce. Cet identificateur peut contenir également un numéro d'abonné.

Afin d'avertir les décodeurs de l'envoi de nouvelles données de mise à jour, le central de communication émet d'abord des signaux d'annonce puis les données de mise à jour. Seuls les décodeurs ayant reçus correctement des signaux d'annonce peuvent se mettre à jour.

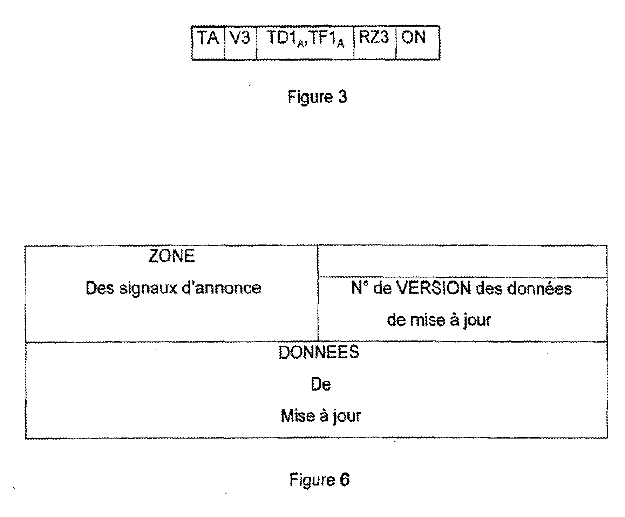

Un exemple de signal d'annonce est présenté à la figure 3.

Un signal d'annonce est constitué d'un bloc de données comprenant au moins :
- l'identificateur du décodeur ou du modèle de décodeurs visé(s), dans l'exemple : TA,
- un identificateur des données comprenant un numéro de version, dans l'exemple : V3,
- au moins un intervalle de temps d'émission de données, ou un ou plusieurs instants d'émission, dans l'exemple : TD1_{A},TF1_{A} ,
- des informations de localisation des données de mise à jour, dans l'exemple : RZ3,
- un indicateur d'état de campagne sur le réseau de diffusion, dans l'exemple, il possède la valeur « ON ».

Les informations de localisation des données spécifient le moyen permettant au décodeur de trouver les données de mise à jour. Si ce moyen est le réseau de diffusion, le signal d'annonce contient le symbole « RZ » suivi d'un numéro de canal. Ce moyen peut aussi être le réseau téléphonique, le signal contenant alors un numéro de téléphone (symbole « TEL ») suivi d'un numéro de téléphone à dix chiffres. Ce moyen peut également être un réseau, par exemple INTERNET, le signal spécifie alors le symbole « IP » suivi de la chaîne de caractère correspondant à l'adresse du serveur. Par exemple, si les données de mise à jour constituent un service interactif que l'on peut extraire dans la base d'un serveur distant, l'information de localisation peut être une donnée connue sous l'acronyme URL (pour "Uniform Resource Locator" en langue anglo-saxone), qui constitue l'adresse où les données se trouvent dans le serveur. Les signaux d'annonce peuvent contenir d'autres informations tels que du texte, des références pour accéder à un réseau (HTML), voire un service interactif.

Les intervalles de temps d'émission sont définis par l'heure de la première émission des données (heure - minute - seconde) et l'heure de la dernière émission des données. Si la première émission de signal d'annonce et la dernière émission de données de mise à jour sont séparées par plus de 24 heures alors il faut ajouter une date (jour et mois). Si l'information de localisation spécifie la voie de retour, le signal d'annonce ne comprend pas d'intervalle de temps d'émission. Le central peut en effet être à tout moment appelé par la voie de retour. Avantageusement, le central détermine les intervalles de temps pour les émissions de données de mise à jour à des instants où les décodeurs sont généralement moins souvent utilisés. Ainsi, il est préférable que l'émission des données de mise à jour s'effectue la nuit.

Une variante consiste à spécifier les instants de début d'émission de chaque session plutôt qu'un intervalle de temps d'émission des sessions. Cette variante permet une programmation fine du décodeur car il peut se caler sur un instant précis. Elle est surtout envisageable lorsque les instants d'émission ne sont pas nombreux, sinon la taille du signal d'annonce serait trop importante.

Le cinquième champ appelé « indicateur d'état de la campagne sur le réseau de diffusion » ou plus simplement « indicateur de campagne » est un drapeau indiquant si les données annoncées sont diffusées et si ce sont les dernières diffusions. Le central peut être perturbé par des événements imprévus tels que l'émission de services interactifs et brusquement ne plus pouvoir émettre les données prévues. L'indicateur permet d'informer les décodeurs de l'arrêt de la diffusion de données et de les prévenir de la fin prochaine d'une campagne. L'indicateur prend trois valeurs :
- « STB » (codé « 0 »), les données annoncées ne sont plus diffusées.
- « ON » (codé « 1 »), les données annoncées sont diffusées.
- « END » (codé « 2 »), les données annoncées sont les dernières diffusées.

Un signal d'annonce avec l'indicateur à « STB » peut posséder des intervalles d'émission, ce qui permet aux décodeurs de se préparer à télécharger lors des intervalles spécifiés à condition qu'entre temps un signal d'annonce avec l'indicateur à « ON » ait été diffusé.

L'émission des données des signaux d'annonce et de données de mise à jour peut s'effectuer selon quatre scénarii différents en fonction de leur chronologie et des moyens de transmission utilisés.
1° - Les signaux d'annonce et les données de mise à jour sont émis sur le même canal du réseau de diffusion. La mise à jour peut s'effectuer immédiatement ou de façon différée.
2° - Les signaux d'annonce sont émis sur plusieurs canaux de diffusion et les données de mise à jour sur un seul canal. La mise à jour peut s'effectuer immédiatement ou de façon différée.
3° - Les signaux d'annonce sont émis sur un ou plusieurs canaux de diffusion et les données de mise à jour sur la voie de retour. Ce cas intervient par exemple lorsque des décodeurs ont été constamment sollicités par l'utilisateur ou étaient débranchés. Ils n'ont pu alors télécharger les données de mise à jour à travers le réseau de diffusion. Ils peuvent ainsi, à l'occasion d'une connexion avec le central, demander un téléchargement des données via la voie de retour, une fois les signaux d'annonce reçus.
4° - Les signaux d'annonce et les données de mise à jour sont émis sur la voie de retour. Ce cas intervient lorsque par exemple le central de communication décide de ne pas allouer de bande passante aux signaux d'annonce sur le réseau de diffusion. Alors à l'occasion d'une connexion avec le central via la voie de retour, le central envoie un signal d'annonce au décodeur connecté.

Les deux premiers scénarii permettent de mettre à jour la grande majorité des décodeurs, les deux derniers concernent plutôt une minorité de décodeurs. Les quatre scénarii vont maintenant être expliqués .

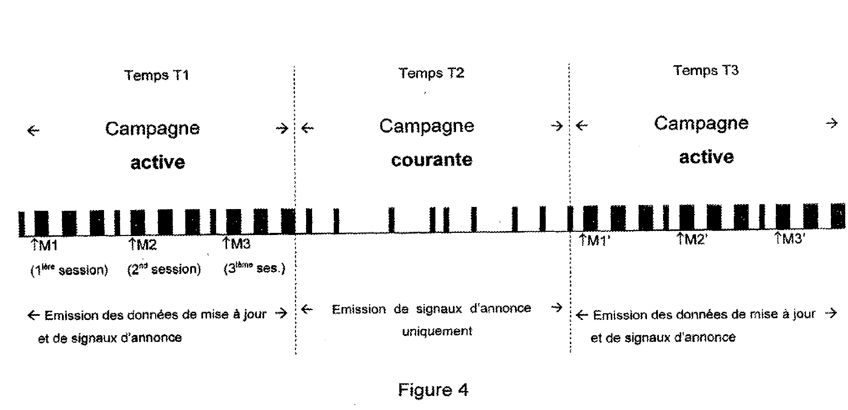

Le schéma de la figure 4 montre la chronologie des signaux émis par le central sur un canal déterminé du réseau de diffusion selon le premier scénario. L'indicateur de campagne dans tous les signaux d'annonce est à « ON ».

Dans un premier temps - temps T1, la campagne est dite « active ». Les données de mise à jour sont émises sur le réseau de diffusion lors des instants M1, M2 et M3 qui appartiennent à l'intervalle de temps spécifié dans le premier signal d'annonce. Sur la figure 4, les signaux d'annonce sont représentés par un trait fin et les données par des traits épais. Le premier signal spécifie l'émission prochaine des sessions de données aux instants M1, M2 et M3. A l'instant M1, une première session de données est diffusée. Une session est représentée par plusieurs traits épais, montrant ainsi l'émission consécutive de plusieurs paquets de données, représentant une ou plusieurs fois la totalité des données de mise à jour (diffusion cyclique des données). Puis un second signal d'annonce est émis, annonçant l'émission prochaine des sessions aux instants M2 et M3, et ainsi de suite. Les signaux d'annonce peuvent être émis à tout moment sauf entre deux paquets d'une même session.

Dans un second temps, seuls les signaux d'annonce sont diffusés, ils spécifient l'intervalle de temps correspondant aux prochaines émissions de données de mise à jour (M1', M2', M3'). La campagne est dite « courante ». Ce second temps permet d'allouer de la bande passante à d'autres flux de données. Dans un troisième temps, la campagne redevient active.

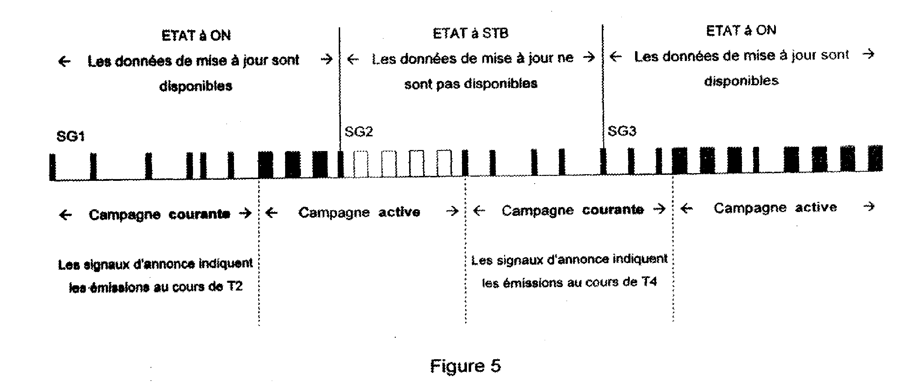

Le schéma de la figure 5 montre l'influence du changement de valeur de l'indicateur au cours d'une campagne. Le premier signal d'annonce émis (SG1) et ceux qui le suivent possèdent un indicateur de campagne à « ON ». La campagne est d'abord courante puis active (les données de mise à jour sont diffusées). A un certain moment, le central ne peut plus émettre d'autres sessions de données, alors il envoie un signal d'annonce (SG2) avec l'indicateur à « STB ». A partir de ce moment, les données de mise à jour qui auraient dû être envoyées sont représentées par des traits vides sur la figure 5. Lors de ces moments, d'autres informations sont diffusées. Plusieurs signaux d'annonce avec la même valeur de l'indicateur sont envoyés afin de prévenir certains décodeurs qui n'auraient pas été à l'écoute lors de SG2. Enfin, à partir du signal d'annonce (SG3), tous les signaux possèdent un indicateur de campagne à « ON ». Les décodeurs sont alors prévenus de la reprise de la campagne de mise à jour et peuvent au début de l'intervalle de temps spécifié, commencer à recevoir les données.

Nous allons maintenant étudier le comportement du décodeur. Lorsqu'il est en marche, le décodeur analyse en permanence les signaux reçus par le canal de diffusion. Cette analyse est réalisée par la couche logicielle de transport. Cette couche détecte les signaux d'annonce, les données de mise à jour et les autres messages.

Un signal d'annonce émis par le central est incorporé dans un paquet de données. Le décodeur reçoit le paquet et la couche transport détecte un signal d'annonce composé des cinq données précédemment décrites. Il compare l'identificateur du décodeur (la référence du constructeur et le type de décodeur) transmis et celui enregistré dans sa mémoire. Si les identificateurs sont différents, le signal d'annonce est ignoré. Si les identificateurs sont identiques, le décodeur est bien destinataire des données du signal d'annonce et des données de mise à jour associées.

Dans ce cas, le décodeur analyse l'identificateur des données et en extrait le numéro de version qu'il compare avec un numéro de version stocké en mémoire non volatile. Si les numéros de version sont identiques, alors le décodeur est déjà doté de cette version de donnée de mise à jour, il est donc inutile d'opérer un nouveau téléchargement. Si ce numéro est différent, le décodeur écrit dans une zone de mémoire non volatile dite « zone des signaux d'annonce », les informations contenues dans le signal d'annonce. Les données du plus récent signal d'annonce écrasent celles des signaux reçus antérieurement, de telle sorte qu'il n'existe qu'un seul signal d'annonce dans la mémoire.

La mémoire non volatile d'un décodeur comprend au moins les zones indiquées à la figure 6.

La mise à jour effective d'un décodeur ne doit préférentiellement pas gêner son fonctionnement nominal. Ainsi, cette mise à jour intervient, selon le présent exemple de réalisation, de préférence lorsque l'utilisateur n'utilise pas les fonctions interactives du décodeur et, de façon générale, quand le décodeur n'est pas sollicité par l'utilisateur. L'instant le plus favorable est habituellement la nuit. Chaque fois que le décodeur cesse d'être utilisé, il lit le contenu de la zone des signaux d'annonce. Si cette zone est vide, aucun signal n'a été reçu depuis la dernière mise à jour, les étapes suivantes ne sont pas exécutées et le programme peut effectuer d'autres tâches.

Si la zone des signaux d'annonce n'est pas vide, le décodeur lit les données du signal d'annonce et détermine s'il se trouve dans l'intervalle de temps spécifié. Pour cela, il compare l'heure courante avec les heures de début et de fin d'émission. Si l'heure de fin d'émission est dépassée, il est trop tard pour effectuer la mise à jour. Si l'heure de début d'émission n'est pas atteinte, le décodeur peut effectuer d'autres tâches. Il peut aussi se mettre en mode veille et programmer un réveil quelques instants avant l'heure de début. Si l'heure courante se trouve dans l'intervalle, le décodeur peut recevoir les données selon le moyen spécifié dans le signal d'annonce. Examinons d'abord le cas ou le signal indique que les données sont disponibles sur le réseau de diffusion. Le cas concernant la liaison bidirectionnelle sera examiné plus loin dans la présente description.

Au cours de l'intervalle de temps spécifié dans le signal d'annonce, le décodeur se met à l'écoute, via son interface de communication unidirectionnelle (26), du canal de diffusion spécifié. La quasi totalité des ressources étant alors consacrée au téléchargement, ses possibilités coté utilisateur sont grandement diminuées. Ainsi, toute interactivité est interdite et pour certains modèles, la vidéo et/ou l'audio également. Le décodeur analyse chaque paquet lu et extrait ceux correspondant à des données de mise à jour. Puis il compare l'identificateur des données reçu avec celui mémorisé dans la zone des signaux d'annonce. S'ils sont égaux, les données sont bien celles annoncées. Le décodeur écrit alors le contenu des données dans la mémoire programmable non volatile.

Lorsque la mise à jour a été effectuée, le décodeur met à jour le numéro de version contenu dans sa mémoire non volatile. Ce nouveau numéro de version évite au décodeur de réaliser une mise à jour à l'aide de la même version et donc des mêmes données. Ensuite, le décodeur met également à zéro la zone des annonces. Cette zone sera ainsi déclarée vide lors de la prochaine mise sous tension. Enfin, le décodeur envoie au central de communication un signal de bon déroulement de l'opération de mise à jour. Ce signal est envoyé par la voie de retour. Si les données de mise à jour sont émises via le réseau de diffusion, le décodeur peut soit effectuer immédiatement une connexion au réseau « point à point » pour envoyer le signal de bon déroulement de la mise à jour, soit le mémoriser et l'envoyer lors d'une connexion ultérieure par la voie de retour.

Avantageusement, ce signal peut contenir l'heure de la mise à jour effective du décodeur. Ainsi le central peut réaliser des statistiques sur le moment où les décodeurs se mettent à jour par le réseau de diffusion.

Les données de mise à jour peuvent être émises une ou plusieurs fois. Si elles sont émises plusieurs fois, les chances d'atteindre les décodeurs à un instant où ils sont disponibles sont multipliées, ce qui permet de mettre à jour le maximum de décodeurs.

Un exemple du déroulement d'une campagne de mise à jour est maintenant présenté. Soient deux modèles de décodeurs : A et B, chaque modèle de décodeur ayant sa propre valeur d'identificateur. Le groupe de décodeurs du modèle A possède la version de données de mise à jour numéro 2 (« V2 ») et le groupe de décodeurs du modèle B a la version de données de mise à jour numéro 5 (« V5 »). Le but de la campagne est d'effectuer la mise à jour des deux groupes, les décodeurs A recevant la version 3 (« V3 ») et les B la version 6 (« V6 »).

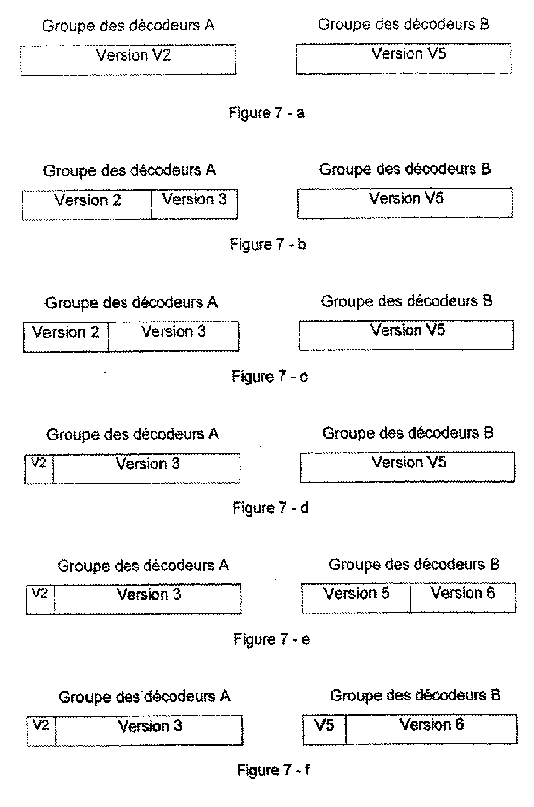

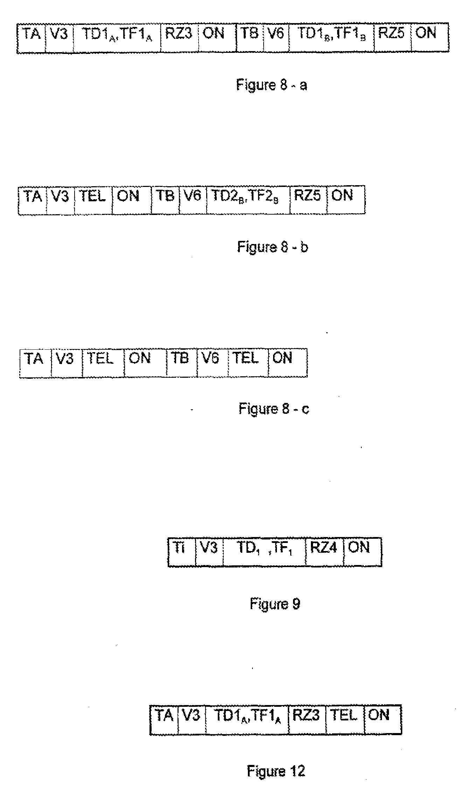

On peut schématiser l'ensemble des décodeurs par le schéma de la figure 7 - a. La campagne de mise à jour commence par l'envoi des signaux d'annonce. Le signal d'annonce représenté à la figure 8 - a est un bloc comportant deux groupes de données, le premier pour les décodeurs de type A et le second pour les décodeurs de type B. On peut aussi émettre deux signaux d'annonce séparés, le premier correspondant aux décodeurs A et le second aux décodeurs B. Les valeurs indiquées sur la figure 8 - a indiquent que les données de mise à jour correspondant à la version 3 destinées aux décodeurs A seront disponibles au cours de l'intervalle de temps [TD1_{A},TF1_{A}] sur le canal de diffusion numéro 3. Les données de mise à jour correspondant à la version 6 destinées aux décodeurs B seront disponibles au cours de l'intervalle de temps [TD1_{B},TF1_{B}] sur le canal de diffusion numéro 5.

Ce signal d'annonce est répété à l'identique un certain nombre de fois. Les décodeurs A enregistrent dans leurs mémoires le numéro de la version (V3), l'intervalle de temps d'émission [TD1_{A},TF1_{A}] et, le moyen d'accéder aux données de mise à jour : le canal 3 du réseau de diffusion. Les décodeurs B enregistrent dans leur mémoires le numéro de la version (V6), l'intervalle de temps d'émission [TD1_{B},TF1_{B}] et, le moyen d'accéder aux données de mise à jour : le canal 5 du réseau de diffusion. Les décodeurs attendent ensuite la première heure d'émission, TD1_{A} pour les décodeurs A et TD1 _{B} pour les décodeurs B.

Si le décodeur n'est pas muni d'une horloge capable de réveiller l'unité centrale, il peut scruter le réseau de diffusion et guetter l'arrivée du message de mise à jour. Pendant ce temps, les parties non utilisées du décodeur peuvent être en mode faible consommation (l'afficheur par exemple). Sinon, le décodeur peut programmer l'horloge pour déclencher un réveil peu de temps avant le début de l'intervalle de temps spécifié dans le signal d'annonce, puis le décodeur en entier peut passer en mode veille. Si le signal d'annonce ne contient pas un intervalle de temps mais des instants d'émission, le décodeur choisit de préférence le premier dans l'ordre chronologique.

Les données de mise à jour sont envoyées lors de sessions répétitives. Dans l'exemple, les données destinées aux décodeurs A sont émises trois fois aux instants M_{A}1, M_{A}2 et M_{A}3 et les données destinées aux décodeurs B sont émises quatre fois aux instants M_{B}1, M_{B}2, M_{B}3, M_{B}4. Il est préférable de ne pas alterner les émissions des signaux pour les terminaux A et B. En effet et on le verra par la suite, une connexion avec le central par la VR peut être demandée indiquant le bonne mise à jour du décodeur. Si les émissions pour les terminaux A et B sont alternées, assez rapidement les décodeurs A et B vont se mettre à jour et vouloir se connecter par la VR. Cela risque de surcharger la communication au niveau du central. Il convient donc de mettre à jour le maximum de terminaux A avant de lancer la campagne pour les terminaux B.

Après la première émission des données destinées au décodeur A (dans l'exemple : après l'instant M_{A}1), supposons que l'état des décodeurs est celui représenté à la figure 7 - b. Un peu moins de la moitié des décodeurs a été mise à jour. Après l'émission des données de l'instant M_{A}2, il y a plus de décodeurs A avec la nouvelle version (V3) que de décodeurs avec l'ancienne (V2). L'état des décodeurs est illustré à la figure 7-c. Quelques temps avant la diffusion des dernières données de mise à jour, le central émet des signaux d'annonce avec la valeur de l'indicateur à « END ». Les décodeurs sont ainsi informés que les dernières données de mise à jour vont être émises. Chaque décodeur informe l'utilisateur de ce fait par une message sur l'écran de télévision ou sur l'afficheur du décodeur ou tout autre moyen d'affichage. L'utilisateur a ainsi la possibilité de cesser d'utiliser son décodeur pour lui permettre de se mettre à jour par le réseau de diffusion. Après la dernière émission des données destinées aux décodeurs A, il n'en reste qu'un très petit nombre qui n'ont pas été mis à jour, l'état des décodeurs est illustré à la figure 7 - d.

Après la première émission des données B (dans l'exemple : après l'instant M_{B}1), l'état des décodeurs est illustré à la figure 7 - e. Après la dernière émission des données destinées aux décodeurs B (dans l'exemple : après l'instant M_{B}4), comme le montre la figure 7-f, il reste encore un certain nombre de décodeurs qui n'ont pas été mis à jour.

On a dit précédemment qu'à la suite d'une mise à jour correctement effectuée, chaque décodeur envoie au central de communication un signal de bon déroulement de l'opération. Ce signal est envoyé par la voie de retour. Le central de communication mémorise et traite ces signaux. Il détermine approximativement, compte tenu de l'inertie des réponses, les quantités de décodeurs munies de l'ancienne et de la nouvelle version.

Le central de communication analyse alors l'efficacité de la campagne effectuée et détermine le nombre de décodeurs restant à mettre à jour. Pour les décodeurs A, le nombre est faible, leurs mises à jour vont s'effectuer par la voie de retour soit lors d'une communication provoquée par le central, soit lors d'une communication ultérieure provoquée par l'utilisateur. Pour les décodeurs B, le nombre est trop important pour effectuer une mise à jour individuelle par la voie de retour, le central décide alors d'effectuer une nouvelle campagne de mise à jour par le réseau de diffusion. Cette nouvelle campagne commence par l'envoi du signal d'annonce dont les données sont représentées à la figure 8 - b. Au cours du nouvel intervalle de temps [TD2_{B},TF2_{B}], les données de mise à jour pour les décodeurs B sont disponibles sur le réseau de diffusion.

A la fin de cette nouvelle campagne, le nombre de décodeurs restant à mettre à jour est faible et leur mise à jour par la voie de retour est donc possible. Le central envoie alors le signal d'annonce représenté à la figure 8 - c indiquant la fin de l'émission des données sur le réseau de diffusion. Les terminaux qui ne sont pas encore à jour peuvent se connecter à l'aide de la voie de retour.

Le téléchargement des données par la voie de retour sera décrit dans le troisième scénario.

En variante, si, au cours d'une campagne, le central de communication s'aperçoit qu'un grand nombre de décodeurs est mis à jour et que les décodeurs restants peuvent l'être par la voie de retour, un signal indiquant une fin prématurée d'émission de données de mise à jour peut être envoyé avant la dernière heure d'émission initialement prévue. Ce signal peut être spécifique ou revêtir le format d'un signal d'annonce. Dans ce cas, ce signal d'annonce contient un intervalle de temps plus court que le précédent, éliminant ainsi les dernières mises à jour initialement prévues. Cette variante évite d'envoyer sur le réseau de diffusion des données qui seront utiles à peu de décodeurs.

Avantageusement, les émissions des signaux d'annonce et des données de mise à jour peuvent être concomitantes. On peut par exemple alterner sur le réseau de diffusion les émissions de signaux d'annonce et de sessions de données de mise à jour. Si l'on excepte les problèmes de réception (altération de données par exemple), on peut envoyer un seul signal d'annonce suivi immédiatement de la diffusion d'une seule session de données. En fait, la diffusion permanente de signaux d'annonce assure qu'un maximum de décodeurs soit prévenu de l'émission prochaine des données. On voit sur la figure 4 que des signaux d'annonce sont émis entre les instants d'émission M1, M2, M3 des sessions. Le fait d'intercaler des signaux d'annonce entre des émissions de données de mise à jour présente l'avantage de mettre à jour les décodeurs qui sont disponibles dès le premier instant indiqué dans le signal, l'émission des données de mise à jour suivant immédiatement le signal d'annonce.

Une variante de réalisation consiste à mémoriser plusieurs signaux d'annonce dans la mémoire. Les signaux d'annonce possédant une fenêtre périmée ou dont tous les instants d'émission sont dépassés, sont automatiquement effacés. Seuls les signaux d'annonce ayant des instants d'émission postérieurs au moment présent sont pris en compte.

Une amélioration du premier scénario consiste à émettre les signaux d'annonce sur plusieurs canaux de diffusion. C'est le second scénario, il permet d'avertir un maximum de décodeurs que les données de mise à jour vont être émises sur un canal spécifique. En effet, les signaux d'annonce nécessitant peu de bande passante, ils dégradent peu les performances des canaux sur lesquels ils sont émis. Par exemple, le signal d'annonce représenté à la figure 9 est émis à l'identique sur les canaux 1,2 et 5. Ce signal d'annonce spécifie que la version 3 des données de mise à jour sera disponible sur le canal 4 dans l'intervalle de temps [TD1ᵢ,TF1ᵢ].

Les décodeurs Ti qui reçoivent les canaux 1, 2 et 5 traitent ce signal d'annonce. S'ils ont besoin de la version 3, ils peuvent scruter le canal numéro 4 entre les instants TD1ᵢ et TF1ᵢ et faire l'acquisition des données. Le changement de canaux s'effectue automatiquement si le décodeur n'est pas utilisé par l'utilisateur. Sinon, à l'instant M1, le décodeur propose à l'utilisateur le téléchargement en effectuant un changement de canal. L'utilisateur peut accepter ou refuser le téléchargement. Dans ce dernier cas, le décodeur proposera de nouveau un téléchargement à l'instant M2.

Selon une variante, si ce n'est pas une fin de campagne (l'indicateur de campagne n'a pas la valeur « END), le décodeur ne dérange pas l'utilisateur et attend qu'il cesse de l'utiliser pour procéder au téléchargement. La décision de télécharger est alors prise uniquement par le décodeur, l'utilisateur peut ne pas en avoir connaissance. Par contre, si les signaux d'annonce indiquent la fin d'une campagne, il faut proposer à l'utilisateur le téléchargement en lui indiquant par exemple, que s'il ne le fait pas, la mise à jour devra s'effectuer par la voie de retour.

Comme dans le premier scénario, les décodeurs émettent à la fin du téléchargement un signal de bon déroulement à la fin de l'opération.

Il se peut qu'un décodeur soit constamment sollicité par l'utilisateur ou être débranché, dans tous les cas il ne peut télécharger les données émises sur le réseau de diffusion. Le troisième scénario va lui permettre d'effectuer le téléchargement par la voie de retour. Il profite donc d'une connexion avec le central via la voie de retour. Lors de cette connexion dont la raison peut être, par exemple, l'exécution d'un service interactif demandé par l'utilisateur, le décodeur émet un signal de demande d'envoi de données de mise à jour.

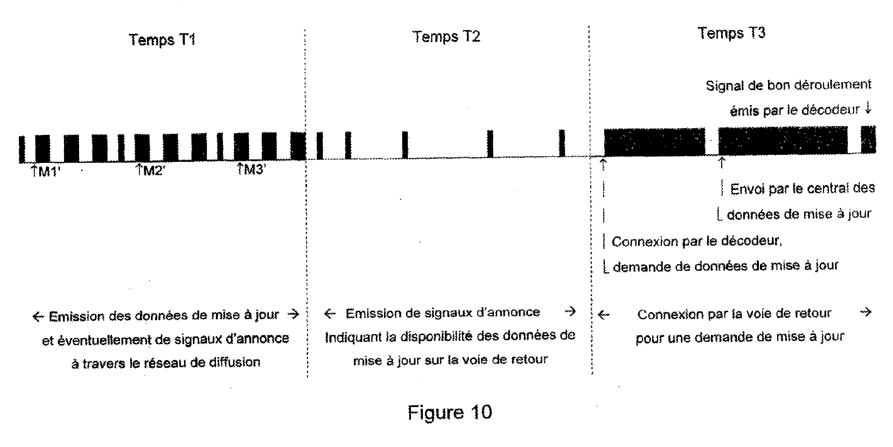

Le schéma de la figure 10 montre la chronologie des signaux échangés entre le central et un décodeur selon le troisième scénario. Dans un premier temps - temps T1**,** les données de mise à jour sont accessibles sur le réseau de diffusion. Certains décodeurs ne peuvent se mettre à jour à l'issue de ce temps. Ensuite, au cours du temps T2, l'émission des données de mise à jour est arrêtée sur le réseau de diffusion et les signaux d'annonce indiquent que les données sont désormais disponibles à travers la voie de retour bidirectionnelle. Au début du temps T3, le décodeur se connecte au central. Il peut le faire soit uniquement pour le téléchargement d'une mise à jour, soit pour demander, à l'initiative de l'utilisateur, un service interactif et à la fin demander le téléchargement. Dans les deux cas, le décodeur émet au cours de la connexion une requête pour demander une mise à jour. Le central envoie alors les données de mise à jour. A la fin du téléchargement, un signal de bon déroulement est envoyé par le décodeur avertissant ainsi le central de sa mise à jour.

Il peut arriver que la bande passante soit très encombrée par d'autres signaux plus prioritaires que des données de mise à jour et des signaux d'annonce et qu'il n'y a plus de bande passante à allouer à ce type d'informations. Il peut arriver aussi que le décodeur ne soit pas connecté à un canal diffusant des signaux d'annonce et qu'à l'occasion d'une connexion, il s'aperçoive qu'une mise à jour est nécessaire. Il peut alors demander au central de lui envoyer un signal d'annonce par la voie bidirectionnelle. Selon un quatrième scénario, perfectionnement de l'invention, le décodeur utilise la voie de retour pour émettre à la fois le signal d'annonce et les données de mise à jour.

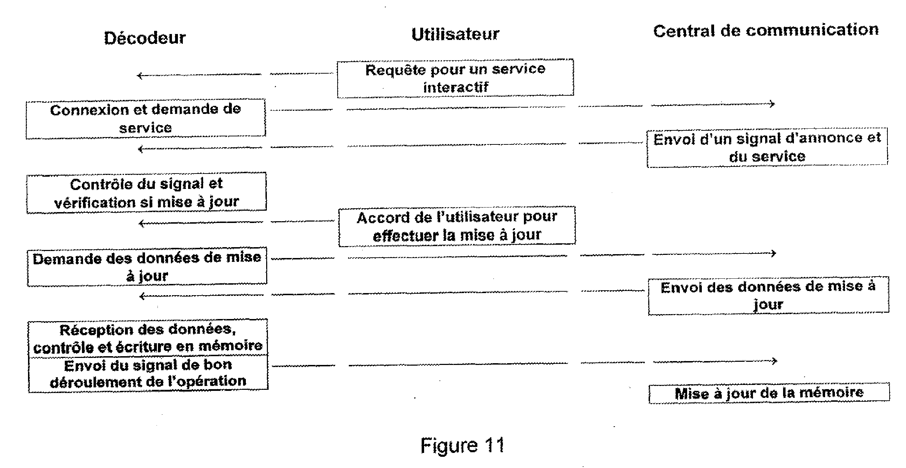

Le schéma de la figure 11 montre la chronologie des signaux échangés entre le central et les décodeurs selon ce quatrième scénario. A l'initiative de l'utilisateur, le décodeur se connecte au central de communication pour lui demander par exemple un service interactif. Le central répond par l'envoi d'un signal d'annonce et du service demandé. Le décodeur reconnaît l'envoi d'un signal d'annonce et contrôle s'il a besoin d'une mise à jour. Si c'est le cas, il prévient l'utilisateur d'une mise à jour en cours. L'utilisateur peut accepter la mise à jour ou la différer jusqu'à la fin de l'exécution du service interactif. Lorsque le décodeur est prêt à recevoir les données de mise à jour, il envoie une requête au central. Le central émet alors les données de mise à jour. Une fois les données reçues et correctement écrites en mémoire, le décodeur envoie un signal de bon déroulement d'opération et se déconnecte. Le central met à jour sa mémoire en indiquant que ce décodeur vient d'être mis à jour avec une nouvelle version de données.

Ce quatrième scénario a pour avantage de parfaitement cibler le décodeur à mettre à jour. En effet, on a dit précédemment que le central connaît approximativement, compte tenu de l'inertie des envois de signaux de bon déroulement, la version contenue dans la mémoire de chaque décodeur. A l'occasion d'une connexion par la voie de retour, le central vérifie si ce décodeur a besoin d'une nouvelle version. Si c'est le cas, il émet un signal d'annonce proposant au décodeur de se mettre à jour. Le décodeur compare le numéro de version émis et celui en mémoire. En effet, le central peut ne pas avoir reçu le signal de bon déroulement et faire cette requête à tort. Si le décodeur n'a pas besoin de mise à jour, il l'indique au central qui met alors à jour sa mémoire. S'il a besoin d'une mise à jour il demande au central d'effectuer le scénario décrit précédemment.

Une amélioration de la présente invention est représenté par un cinquième scénario. Celui-ci concerne des décodeurs très sollicités par leurs utilisateurs et qui n'ont pas la possibilité de faire l'acquisition de signaux d'annonce. Dans ce cas, à l'occasion d'une connexion avec le central à l'initiative du décodeur, le central transmet un signal d'annonce indiquant que des données de mise à jour sont actuellement diffusées sur le réseau de diffusion. Le décodeur est alors informé de l'émission et peut avertir l'utilisateur qu'il peut mettre à jour son décodeur. L'utilisateur peut alors cesser d'utiliser son décodeur le temps de l'opération.

Une variante de ce scénario consiste en ce que les données diffusées sur le réseau ont une composante chiffrée qui rend l'information audiovisuelle inexploitable à quiconque n'a pas la clé de déchiffrement. Cette clé va permettre aux décodeurs qui la possèdent de déchiffrer les données de mise à jour et de les rendre utilisables. Le signal d'annonce étant transmis individuellement à chaque décodeur par une connexion spécifique, ce signal peut contenir la clé de déchiffrement. Auparavant, l'utilisateur a pris soin d'acquérir le droit de recevoir cette clé, en payant une somme d'argent par exemple.

Une variante consiste à prendre en considération une altération des données téléchargées dans la mémoire. Dans ce cas, les données n'étant plus utilisables, il faut en télécharger de nouvelles, c'est la « remise à jour de secours ». Le décodeur en détresse analyse les informations émises à travers le réseau de diffusion et réceptionne les signaux d'annonce correspondant à son modèle. Il peut ainsi déterminer la version de logiciel dont il a besoin, ainsi que le moyen de l'acquérir et à quel moment il peut effectuer le téléchargement. Si la campagne est active, il peut télécharger immédiatement les données. Si la campagne est courante, de façon analogue au troisième scénario, il effectue une connexion avec le central et télécharge les données de mise à jour à travers la voie de retour. Le facteur déclenchant la mise à jour de secours peut aussi être la réception chez l'utilisateur d'un décodeur neuf qui possède une mémoire vierge. Selon cette variante, le signal d'annonce possède un champ supplémentaire tel que le montre la figure 12. Ce champ spécifie le moyen permettant de télécharger les données à travers la liaison bidirectionnelle (réseau téléphonique, adresse de réseau tel qu'INTERNET,...). Les données selon l'exemple de signal d'annonce de la figure 12, sont émises sur le réseau de diffusion (sur le canal RZ3) et en cas de secours, le décodeur peut se connecter au numéro représenté par « TEL » pour les recevoir.

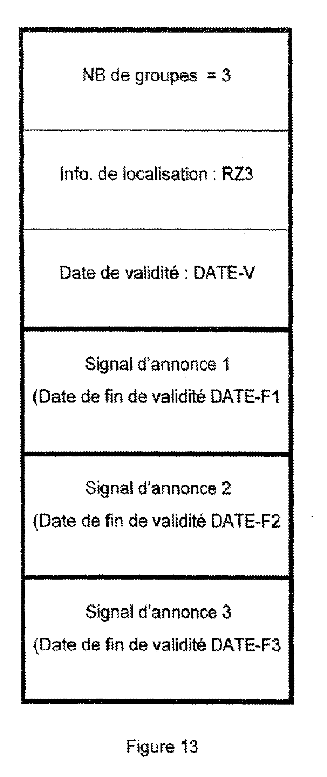

Un perfectionnement de l'invention consiste à inclure dans le signal d'annonce une date de validité et/ou une date de fin de validité. La date de validité permet de donner l'accès à l'utilisateur aux données téléchargées qu'à partir de la date spécifiée. La date de fin de validité permet de supprimer l'accès à l'utilisateur aux données téléchargées. Les données téléchargées peuvent ainsi être effacer de la mémoire, libérant ainsi de la place. Avantageusement, si le décodeur reçoit un signal de validité dont le date de fin de validité est déjà passée, il ne tient pas compte de ce signal d'annonce. Selon une variante, si un ou plusieurs éléments de plusieurs signaux d'annonce sont identiques, il est possible de les regrouper dans une table dotée d'une entête. Cette en-tête contient les valeurs communes à tous les signaux d'annonces de la table. La figure 13 montre une table comprenant trois signaux d'annonce correspondant à l'émission de trois groupes de données numérotés 1,2 et 3. Les informations de localisation (RZ3) et les dates de validité (DATE-V) sont identiques pour les trois groupes de données et sont regroupées dans l'entête. Les valeurs différentes telles que les dates de fin de validité (DATA-F1, DATA-F2, DATE-F3) restent dans chaque signal d'annonce.

Il faut bien noter que la présente invention s'applique aussi bien dans le domaine des télévisions analogiques que dans le domaine des télévisions numériques.

## Revendications

1. Procédé de réception de données de mise à jour émises par un central de diffusion vers une pluralité de terminaux, le central diffusant une campagne de mise à jour au cours de laquelle lesdits terminaux reçoivent et mémorisent les données de mise à jour, **caractérisé en ce qu'**il comporte en outre, une étape de réception par un terminal de signaux émis par le central annonçant la diffusion des données de mise à jour et contenant au moins une indication temporelle, une étape de programmation d'une horloge interne de ce terminal suivi d'une étape de mise en mode faible consommation du terminal, et une étape de réveil du terminal par son horloge afin de recevoir les données de mise à jour au moment spécifié par une indication temporelle.

2. Procédé de réception selon la revendication 1 **caractérisé en ce que** l'étape de réveil intervient peu de temps avant le moment spécifié dans l'indication temporelle.

3. Procédé de réception selon les revendications 1 ou 2, **caractérisé en ce que** l'indication temporelle contenu dans le signal émis par le central définit un intervalle de temps, le terminal étant remis en mode faible consommation au moment où l'intervalle de temps se termine.

4. Procédé de réception selon les revendications 1 ou 2, **caractérisé en ce que** le signal émis par le central contient une pluralité d'indications temporelles, l'indication temporelle utilisée pour la programmation de l'horloge permettant le réveil du terminal étant la première dans l'ordre chronologique.

5. Procédé de réception selon l'une quelconque des revendications précédentes, **caractérisé en ce qu'**au moins une indication temporelle contenu dans le signal émis par le serveur définit un intervalle de temps pour les émissions de données de mise à jour au cours duquel les terminaux sont moins souvent utilisés, la nuit par exemple.

6. Procédé de réception selon l'une quelconque des revendications précédentes, **caractérisé en ce que** le signal émis par le serveur contient en outre une information spécifiant que les prochaines données de mises à jour sont les dernières données diffusées.

7. Terminal (1) comportant un circuit de réception (26) pour recevoir des données de mise à jour provenant d'un central de diffusion à travers un réseau de diffusion (4), une mémoire (24) pour le stockage desdites données de mise à jour, et une horloge interne (28) capable de réveiller le terminal à un moment déterminé, **caractérisé en ce que** le dit circuit de réception (26) reçoit des signaux annonçant la diffusion des données de mise à jour et contenant au moins une indication temporelle, la dite horloge (28) commutant le terminal d'un mode faible consommation vers un mode de réveil afin de recevoir les données de mise à jour par le circuit de réception (26) au moment spécifié par une indication temporelle.

8. Terminal selon la revendication 7, **caractérisé en ce que** l'horloge (28) commute le terminal peu de temps avant le moment spécifié dans l'indication temporelle.

9. Terminal selon les revendications 7 ou 8, **caractérisé en ce que** l'indication temporelle contenu dans le signal émis par le central définit un intervalle de temps, le terminal étant remis en mode faible consommation au moment où l'intervalle de temps se termine.

10. Terminal selon les revendications 7 ou 8, **caractérisé en que** le signal reçu par le circuit de réception (26) contient une pluralité d'indications temporelles, l'indication temporelle utilisée par l'horloge (28) pour commuter le terminal d'un mode faible consommation vers un mode de réveil étant la première dans l'ordre chronologique.

11. Terminal selon l'une quelconque des revendications 7 à 10, **caractérisé en ce qu'**au moins une indication temporelle contenue dans le signal émis par le serveur définit un intervalle de temps pour les émissions de données de mise à jour au cours duquel les terminaux sont moins souvent utilisés, la nuit par exemple.

12. Terminal selon l'une quelconque des revendications 7 à 11, **caractérisé en ce que** le signal reçu par le circuit de réception (26) contient en outre une information spécifiant que les prochaines données de mises à jour sont les dernières données à recevoir.
